# EUROPÄISCHE PATENTSCHRIFT

(11) **EP 3 494 305 B1**
(45) Veröffentlichungstag und Bekanntmachung des Hinweises auf die Patenterteilung: **08.07.2020**
(21) Anmeldenummer: 17751041.9
(22) Anmeldetag: 24.07.2017
(51) Int. Cl.: F03D 7/02, F03D 7/04, H02J 3/38, H02J 13/00

(54) **VERFAHREN ZUM AUSGEBEN EINES REGLERSOLLWERTS FÜR EINEN ENERGIEERZEUGER SOWIE VORRICHTUNG DAZU UND SYSTEM DAMIT**
METHOD FOR EMITTING A CONTROLLER SETPOINT FOR A POWER GENERATOR, DEVICE THEREFOR AND SYSTEM CONTAINING SAME
PROCÉDÉ POUR DÉLIVRER UNE VALEUR DE RÉGULATION DE CONSIGNE POUR GÉNÉRATEUR D'ÉNERGIE, DISPOSITIF CORRESPONDANT ET SYSTÈME ASSOCIÉ

(30) Priorität: 02.08.2016 DE 102016114254
(43) Veröffentlichungstag der Anmeldung: 12.06.2019
(73) Patentinhaber: Wobben Properties GmbH, 26607 Aurich (DE)
(72) Erfinder: GIERTZ, Helge, 26789 Leer (DE)
(74) Vertreter: Eisenführ Speiser
(86) Internationale Anmeldenummer: PCT/EP2017/068643
(87) Internationale Veröffentlichungsnummer: WO 2018/024530

(56) Entgegenhaltungen:
- EP-A2- 1 783 365
- WO-A1-2014/173685
- DE-A1-102015 200 209

## Beschreibung

Die Erfindung betrifft die Ausgabe von Reglersollwerten für die Regelung von Energieerzeugern, wie zum Beispiel Windenergieanlagen, insbesondere zur Regelung der Einspeisung elektrischer Energie der Energieerzeuger in ein Versorgungsnetz.

Neben herkömmlichen Großkraftwerken, die beispielsweise elektrische Energie mittels fossiler Brennstoffe gewinnen und zur Sicherung der Grundlast dienen, werden heutzutage immer mehr Windenergieanlagen mit einem Versorgungsnetz verbunden, um gemeinsam Energie in das Versorgungsnetz einzuspeisen. Windenergieanlagen dienen häufig, wie auch Gas-, Wasser- und Solarkraftwerke, zur Bereitstellung der Mittel- und Spitzenlasten im Versorgungsnetz.

Der Grund hierfür ist, dass Windenergieanlagen gegenüber herkömmlichen Kraftwerken den Vorteil aufweisen, dass die eingespeiste elektrische Energie besonders flexibel innerhalb sehr kurzer Zeiträume im Hinblick auf Ihre Parameter, wie zum Beispiel Wirk- oder Blindleistung, an den Bedarf der mit dem Versorgungsnetz verbundenen Verbraucher angepasst werden kann. Demgegenüber ist beispielsweise der Vorgang des Erhöhens oder Absenkens einzuspeisender Leistung durch herkömmliche Großkraftwerke sehr träge, sodass eine Anpassung, also eine Erhöhung oder Absenkung, über Stunden dauern kann.

Da jedoch der Energiebedarf der mit dem Versorgungsnetz verbundenen Verbraucher in Abhängigkeit der Tageszeit oder des Wochentags stark variiert, wird eine hohe Flexibilität der im Versorgungsnetz zur Verfügung stehenden elektrischen Leistung benötigt. Zwar sind Prognosemechanismen bekannt, um beispielsweise eine benötigte variierende Energie zur Befriedigung der Grundlast tageszeitabhängig zur Verfügung zu stellen, um so schon frühzeitig in die Regelung herkömmlicher Großkraftwerke einzugreifen. Diese Großkraftwerke stellen den Betrag ihrer Energieeinspeisung daher nach einem prognostizierten Wochen- oder Tagesfahrplan ein und dienen so zur Bereitstellung der Grundlast des Versorgungsnetzes. Im Falle zusätzlicher kurzzeitiger Energiebedarfsvariationen - im Falle variierender Mittel- und Spitzenlasten - werden jedoch immer häufiger Windenergieanlagen zur Netzstützung eingesetzt, um hier eine hohe Flexibilität und damit eine hohe Netzsicherheit zu gewährleisten.

Der Übertragungsnetzbetreiber (ÜNB) und/oder der Versorgungsnetzbetreiber, die hier gemeinsam betrachtet werden und im Folgenden allgemein Netzbetreiber genannt werden, überträgt somit von seiner Leitzentrale aktuelle Sollwerte, beispielsweise zum Regeln der einzuspeisenden Leistung eines Windparks, auf Grundlage der zurzeit benötigten Energie als Reglersollwerte an die Regler eines Windparks oder einzelner Windenergieanlagen. Zur Übertragung der aktuellen Sollwerte wird eine Datenkommunikationsleitung verwendet. Hierbei ist es möglich, dass zwischen dem Übertragungsnetzbetreiber und einem Windpark oder einzelnen Windenergieanlagen noch ein sogenannter Cluster-Regler (CLU), auch virtuelles Kraftwerk (VK) genannt, zwischengeschaltet ist. Ein Cluster-Regler überträgt die vom Netzbetreiber vorgegebenen aktuellen Sollwerte - gegebenenfalls nach Anpassung im Cluster-Regler - als einzelne aktuelle Sollwerte für mehrere Energieerzeuger, zum Beispiel Windparks, eines Teilnetzes des Versorgungsnetzes. Das Teilnetz des Versorgungsnetzes wird auch als Cluster bezeichnet. Diese aktuellen Sollwerte werden von Windenergieanlagen oder Windparks daher beispielsweise in Minutenintervallen empfangen.

Hierbei ist es bekannt, dass Kommunikationsstörungen zwischen der Leitzentrale des Netzbetreibers und dem Windpark oder den Windenergieanlagen auftreten können. In dem Fall, dass beispielsweise keine aktuellen Sollwerte mehr übertragen werden, muss also in irgendeiner Art und Weise auch ein autarker Betrieb der Windenergieanlage oder des Windparks gewährleistet werden. Hierbei sind im Stand der Technik mehrere Möglichkeiten bekannt, um derartige Kommunikationsausfälle zu behandeln. Im Dokument WO 2014/173685 A1 werden beispielsweise Windenergieanlagen nacheinander abgeschaltet, wenn ein Fehler in einer zentralen Windparksteuereinheit detektiert wird (die zweiteilige Form des Anspruchs 1 und des Anspruchs 9 basiert auf diesem Dokument). Weiter ist im Dokument DE 10 2009 042 368 A1 eine Kommunikation mit einem Steuersystem zum Steuern von sicherheitskritischen Prozessen offenbart. Das Dokument US 6,853,292 B1 offenbart ein Sicherheitssteuersystem, das eine Kommunikation zwischen einer zentralen Steuerung und dezentralen Stationen betrifft.

Heutzutage ist es beispielsweise vorgesehen, dass eine Windenergieanlage oder ein Windpark, der keine aktuellen Sollwerte von einer Leitzentrale oder einem Cluster-Regler für die Regelung beispielsweise der einzuspeisenden Leistung erhält, den Reglersollwert auf einen vorgegebenen Standardwert, der auch Default-Wert genannt werden kann, einstellt. Gleiches gilt für den Fall, dass ein Cluster-Regler keine Sollwerte mehr von der Leitzentrale des Netzbetreibers empfängt. Der Windpark oder die Windenergieanlage werden demnach mit diesem Standardwert so lange betrieben, bis die Datenübertragung zwischen der Leitzentrale und dem Windpark wiederhergestellt ist und weitere aktuelle Sollwerte empfangen werden. Im schlimmsten Fall wird der Windpark für die Zeit der Kommunikationsstörung vom Netz genommen.

Gerade im Hinblick auf den immer größer werdenden Einfluss von Windparks oder anderen Energieerzeugern zur Bereitstellung von Mittel- und Spitzenlasten zur Stützung von Energieschwankungen des Versorgungsnetzes ist es jedoch gewünscht, dass auch bei einem Ausfall der Kommunikationsmöglichkeiten zwischen der Leitzentrale eines Netzbetreibers und den Energieerzeugern die Reglersollwerte zur Regelung des Energieerzeugers nicht ausschließlich auf einen Standardwert begrenzt werden, sondern weiterhin eine Netzstützung durch Reaktion auf kurzzeitige Energiebedarfsvariationen erfolgt. Demnach sollen also möglichst weiterhin an die Bedarfssituationen angepasste Reglersollwerte für die Regelung ausgegeben werden, auch wenn diese aufgrund eines Kommunikationsausfalls nicht mehr direkt vorgegeben werden können.

Aufgabe der vorliegenden Erfindung ist es also, eines der im Stand der Technik zuvor genannten Probleme zu adressieren. Insbesondere sollen im Falle eines Kommunikationsausfalls zwischen einer Leitzentrale eines Netzbetreibers und Energieerzeugern, insbesondere Windenergieanlagen oder Windparks, weiterhin die Reglersollwerte möglichst gut an den Energiebedarf der mit dem Netz verbundenen Verbraucher angepasst sein. Erfindungsgemäß wird diese Aufgabe durch ein Verfahren mit den Merkmalen des Hauptanspruchs 1 und eine Vorrichtung mit den Merkmalen des Hauptanspruchs 9 gelöst. Ausführungsbeispiele sind in der Unteransprüchen weiter definiert.

Das Deutsche Patent- und Markenamt hat in der Prioritätsanmeldung zu vorliegender Anmeldung den folgenden Stand der Technik recherchiert: DE 10 2010 006 527 A1, US 2014/0049109 A1, US 2013/0185437 A1, US 2015/0142187 A1 und Li, Z. et al. "Novel ACG strategy considering communication failure possibility for interconnected power grids".

Die Erfindung betrifft hierzu ein Verfahren und eine Vorrichtung zum Ausgeben eines Reglersollwerts für einen Energieerzeuger, insbesondere mindestens eine Windenergieanlage oder mindestens einen Windpark, oder einen Cluster-Regler. Hierzu wird mit einem Dateneingang ein Datenpaket empfangen. Das Datenpaket umfasst einen aktuellen Sollwert und erfindungsgemäß außerdem mehrere zukünftige Sollwerte. Vorzugsweise wurde das Datenpaket zuvor von einer Leitzentrale eines Netzbetreibers oder einem Cluster-Regler ausgesendet.

Im Hinblick auf die Sollwerte eines Datenpakets wird demnach zwischen aktuellen Sollwerten und zukünftigen Sollwerten unterschieden. Aktuelle Sollwerte sind diejenigen Sollwerte, mit denen der Regler eines Energieerzeugers, zum Beispiel einer Windenergieanlage oder eines Windparks, oder eines Cluster-Reglers zu einem aktuellen Zeitpunkt, also vorzugsweise zu dem oder unmittelbar nach dem Zeitpunkt des Empfangens des Datenpakets beaufschlagt werden soll. Diese aktuellen Sollwerte entsprechen demnach zum Beispiel den zuvor genannten in festen Intervallen, zum Beispiel Minutenintervallen, vom Übertragungsnetzbetreiber für die aktuelle Bedarfssituation berechneten Sollwerten. Zukünftige Sollwerte sind demgegenüber Werte, die beispielsweise durch Prognose des Übertragungsnetzbetreibers mit einer hohen Wahrscheinlichkeit den Sollwerten entsprechen, um auf in der Zukunft liegende Energiebedarfsvariationen zu reagieren.

Sollwerte sind hier beispielsweise für einen Regler oder Leistungsregler eines Energieerzeugers vorgegebene Leistungssollwerte, vorzugsweise Sollwerte zum Regeln der Abgabe der Blindleistung und/oder der Wirkleistung der Windenergieanlage oder des Windparks. Sollwerte sind aber auch zum Beispiel Spannungssollwerte für einen Cluster-Regler, der diese für Aufgaben der Spannungshaltung in Versorgungsnetzen benötigt, um nämlich die mit dem Cluster-Regler verbundenen Energieerzeuger so zu steuern, dass gewünschte Spannungsgrenzen im Netz eingehalten werden.

Die zukünftigen Sollwerte des empfangenen Datenpakets werden daraufhin in einem Speicher hinterlegt, also abgespeichert.

Ferner wird der aktuelle Sollwert des empfangenen Datenpakets mit einem Datenausgang als Reglersollwert für den Energieerzeuger, zum Beispiel die Windenergieanlage oder den Windpark, oder für den Cluster-Regler ausgegeben. Demnach wird also der aktuelle Sollwert eines empfangenen Datenpakets vorzugsweise direkt oder unmittelbar nach dem Empfangen eines Datenpakets als Reglersollwert für den Energieerzeuger, zum Beispiel die Windenergieanlage oder den Windpark, oder den Cluster-Regler ausgegeben.

Erfindungsgemäß wird nun nach Ablauf einer vordefinierten Zeitdauer, in der nach dem Empfangen des Datenpakets kein weiteres, also neues, Datenpaket empfangen wird, ein erster der hinterlegten zukünftigen Sollwerte mit dem Datenausgang als nächster Reglersollwert für den Energieerzeuger oder den Cluster-Regler ausgegeben.

Demnach betrifft die Erfindung eine Vorrichtung mit einem Dateneingang, einem Speicher und einem Datenausgang. Mit dem Dateneingang sind Datenpakete empfangbar, die jeweils einen aktuellen Sollwert und mehrere zukünftige Sollwerte umfassen. Der Speicher ist eingerichtet, zukünftige Sollwerte empfangener Datenpakete zu speichern. Der Datenausgang ist eingerichtet, um Reglersollwerte für die Energieerzeuger oder den Cluster-Regler auszugeben.

Ferner ist die Vorrichtung eingerichtet, nach dem Empfangen eines Datenpakets mit dem Datenausgang den aktuellen Sollwert des empfangenen Datenpakets als Reglersollwert auszugeben und nach Ablauf einer vordefinierten Zeitdauer, in der nach dem Empfangen des Datenpakets kein weiteres Datenpaket empfangen wird, einen ersten der hinterlegten zukünftigen Sollwerte mit dem Datenausgang als nächsten Reglersollwert auszugeben. Hierzu ist vorzugsweise eine Steuerung der Vorrichtung vorgesehen. Die Steuerung ist demnach eingerichtet, um zunächst die aktuellen und zukünftigen Sollwerte des Datenpakets zu separieren und die zukünftigen Sollwerte in dem Speicher zu speichern. Der aktuelle Sollwert wird dann unmittelbar nach dem Empfangen des Datenpakets am Datenausgang als Reglersollwert ausgegeben.

Ferner überwacht die Steuerung die Zeitdauer, die nach dem Empfangen eines Datenpakets verstreicht. Überschreitet diese Zeitdauer eine vordefinierte Zeitdauer und wird innerhalb dieser vordefinierten Zeitdauer kein weiteres Datenpaket empfangen, so liest die Steuerung einen im Speicher hinterlegten zukünftigen Sollwert aus dem Speicher aus und gibt diesen - anstatt einem neuen aktuellen Sollwert eines weiteren Datenpakets, der ja nicht zur Verfügung steht - als Reglersollwert zum Regeln des Energieerzeugers oder des Cluster-Reglers aus.

Dank der Erfindung können demnach vom Netzbetreiber beziehungsweise der Leitzentrale eines Netzbetreibers oder einem Cluster-Regler Datenpakete an die erfindungsgemäße Vorrichtung ausgesendet werden, die neben aktuellen Sollwerten erfindungsgemäß auch zukünftige Sollwerte umfassen. Das heißt, es werden bereits vorsorglich für den Fall eines möglicherweise bevorstehenden Ausfalls der Datenverbindung zwischen dem Netzbetreiber und dem Windpark oder dem Cluster-Regler und dem Windpark bereits zukünftige Sollwerte, die vom Netzbetreiber allein oder mithilfe eines Prognosedienstleisters prognostiziert wurden, mitübertragen. Im Falle, dass die Datenübertragung gestört ist, können die prognostizierten Sollwerte, die hier zukünftige Sollwerte genannt sind, dann ersatzweise statt zeitaktuell berechneter Sollwerte, also den hier genannten aktuellen Sollwerten, verwendet werden, um Regler der Energieerzeuger, zum Beispiel der Windenergieanlagen oder des Windparks, oder den Cluster-Regler mit einem Sollwert zu beaufschlagen.

Hierbei liegt der Erfindung die Erkenntnis zugrunde, dass spezielle Prognosedienstleister heutzutage sehr genaue Prognosen für den Energiebedarf eines Versorgungsnetzes für in der Zukunft liegende Zeiträume vorbestimmen können. Für kurz in der Zukunft liegende Zeiträume, zum Beispiel im Bereich von 20 Minuten bis zu einer Stunde, können kurzzeitige Energiebedarfsvariationen mit einer Wahrscheinlichkeit von nahezu 100 % Genauigkeit prognostiziert werden. Beispielsweise beschränken sich die Abweichungen bei einer Prognose für die folgenden 24 Stunden sogar nur auf etwa 3 % Abweichung.

Die Langzeitprognose wird bereits heute von herkömmlichen Kraftwerken genutzt, um trotz ihrer trägen Reaktion beispielsweise entsprechend dem geplanten Bedarf frühzeitig die zur Verfügung stellbare Leistung anzuheben oder abzusenken und somit die Grundlast zu sichern.

Vorzugsweise kann nun die Kurzzeitprognose, die wesentlich genauer ist, gemäß der Erfindung verwendet werden, um Störungen bei der Datenübertragung zumindest für einen gewissen Zeitraum zu überbrücken. Es kann demnach darauf verzichtet werden, einen Energieerzeuger, wie zum Beispiel eine Windenergieanlage oder einen Windpark, oder einen Cluster-Regler, der zurzeit keine regelmäßig aktualisierten Sollwerte von der Leitzentrale eines Netzbetreibers erhält, mit einem einzigen Standardwert zu betreiben.

Das erfindungsgemäße Verfahren findet vorzugsweise Einsatz direkt in einer Steuerung eines Energieerzeugers oder eines Cluster-Reglers. Demnach ist die entsprechende erfindungsgemäße Vorrichtung beispielsweise Bestandteil eines Windparkreglers, einer Steuerung einer Einzelwindenergieanlage oder eines Cluster-Reglers.

Gemäß einer ersten Ausführungsform werden die in dem Speicher hinterlegten zukünftigen Sollwerte nach jedem Empfangen eines weiteren Datenpakets, also eines Datenpakets, das nach einem zuvor empfangenen Datenpakets empfangen wird, durch die zukünftigen Sollwerte des weiteren Datenpakets überschrieben.

Vom Netzbetreiber werden demnach nicht nur ständig neue aktuelle Sollwerte, sondern auch zukünftige Sollwerte anhand von Prognosen ermittelt. Diese neuen zukünftigen Sollwerte ersetzen dann auch nach jedem Empfang eines neuen oder weiteren Datenpakets die zuletzt gespeicherten zukünftigen Sollwerte.

Hierdurch wird gewährleistet, dass prognostizierte zukünftige Sollwerte, die beispielsweise beim Absenden eines Datenpakets noch weiter in der Zukunft lagen als zu einem darauffolgenden Zeitpunkt, in dem ein weiteres Datenpaket abgesendet wird, im darauffolgenden Zeitpunkt bereits mit einer höheren Sicherheit prognostizierbar gewesen sind. Das heißt, dass auch zukünftige Sollwerte, die zum Beispiel für einen bestimmten zukünftigen Zeitpunkt bestimmt waren, aber schon vor einer längeren Zeit prognostiziert worden sind, durch neue zukünftige Sollwerte, beispielsweise auch für gleiche Zeitpunkte ersetzt werden, da die neuen zukünftigen Sollwerte mit höherer Genauigkeit prognostiziert werden können.

Gemäß einer weiteren Ausführungsform ist jedem der Sollwerte eines Datenpakets jeweils eine Sollwertgültigkeitsdauer zugeordnet. Jedem Sollwert ist somit eine Dauer zugeordnet, für die er gültig sein soll und als Reglersollwert ausgegeben wird. Nach Ablauf dieser Dauer wird dann der entsprechend nächste Sollwert als Reglersollwert ausgegeben. Demnach ist also auch eine Sollwertgültigkeitsdauer für den aktuellen Sollwert hinterlegt, die dann der vordefinierten Zeitdauer entspricht.

Demnach werden nach Ablauf der vordefinierten Zeitdauer, die hier der Sollwertgültigkeitsdauer des aktuellen Sollwerts, der aus dem zuletzt empfangenen Datenpaket entnommen wurde, entspricht, in der nach dem Empfangen des Datenpakets kein weiteres Datenpaket empfangen wird, die hinterlegten zukünftigen Sollwerte mit dem Datenausgang nacheinander jeweils für die Dauer, die der jeweiligen Sollwertgültigkeitsdauer entspricht, als Reglersollwert ausgegeben, solange kein weiteres neues Datenpaket empfangen wird.

Die Sollwertgültigkeitsdauern werden demnach vom Netzbetreiber vorbestimmt. Beispielsweise werden Sollwerte, die in naher Zukunft liegen und die daher noch mit einer sehr hohen Genauigkeit und Auflösung bestimmt werden können, mit einer Sollwertgültigkeitsdauer versehen, die geringer ist als weiter in der Zukunft liegende Sollwerte, die ohnehin nicht mehr vergleichsweise exakt bestimmt werden können. Demnach werden also die Sollwertgültigkeitsdauern vom Netzbetreiber, vorzugsweise in der Leitzentrale, bestimmt und den Sollwerten zugeordnet. Die Sollwertgültigkeitsdauern werden dann zusammen mit den Sollwerten in einem Datenpaket übertragen.

Gemäß einer weiteren Ausführungsform ist jedem der hinterlegten zukünftigen Sollwerte jeweils ein Zeitstempel zugeordnet. Nach Ablauf der vordefinierten Zeitdauer, in der nach dem Empfangen des Datenpakets kein weiteres Datenpaket empfangen wird, werden dann die hinterlegten zukünftigen Sollwerte mit dem Datenausgang nacheinander jeweils zu dem dem Zeitstempel entsprechenden Zeitpunkt als nächster Reglersollwert ausgegeben, solange kein weiteres neues Datenpaket empfangen wird.

Es wird also, nachdem ein Datenpaket über den Dateneingang empfangen wird, zunächst die vordefinierte Zeitdauer abgewartet. Wird nun kein weiteres, also neues, Datenpaket empfangen, so wird immer jeweils zu den Zeitpunkten ein neuer Reglersollwert ausgegeben, die dem Zeitpunkt eines Zeitstempels eines zukünftigen Sollwerts entsprechen. Im Verlauf der Zeit werden somit - solange kein weiteres Datenpaket empfangen wird - die zukünftigen Sollwerte zu den Zeitpunkten, denen jeweils ihre Zeitstempel zugeordnet sind, jeweils als Reglersollwerte ausgegeben.

Hierdurch ist es beispielsweise vom Netzbetreiber möglich, eine Reihenfolge der zukünftigen Sollwerte durch ihre Zeitstempel oder Sollwertgültigkeitsdauern vorzugeben, die flexibel ist. Insbesondere können zum Beispiel, wenn ein Netzbetreiber der Auffassung ist, dass beispielsweise der Sollwert für einen längeren Zeitraum nicht geändert werden muss, wie es beispielsweise nachts der Fall sein könnte, die Zeitstempel oder Sollwertgültigkeitsdauern für diesen Zeitraum mit einem größeren zeitlichen Abstand gewählt werden als es zum Beispiel am Vormittag nötig ist, an dem der Leistungsbedarf, der durch Verbraucher vom Versorgungsnetz bezogen wird, stärker schwankt.

Für den Fall, dass im Datenpaket beispielsweise 20 oder weniger zukünftige Sollwerte übertragen werden, ist somit zumindest im Ausfallzeitraum, der nicht so starken Schwankungen unterliegt, durch Wählen eines längeren Abstands der Zeitstempel oder längeren Sollwertgültigkeitsdauern ein längerer Ausfall einer Datenverbindung zu überbrücken. Insbesondere in der Nacht, wenn also zum Beispiel Servicepersonal zur Behebung eines Schadens an einer Datenverbindung schwerer bereitgestellt werden kann als zu den üblichen Geschäftszeiten, ist es daher vorteilhaft, Zeitstempel mit größerem zeitlichen Abstand oder längeren Sollwertgültigkeitsdauern als am Tag zu wählen.

Gemäß einer weiteren Ausführungsform entsprechen die Zeitstempel unterschiedlichen Zeitpunkten, wobei der zeitliche Abstand, der den Zeitstempeln entsprechenden Zeitpunkten zugeordnet ist, entsprechend der zeitlichen Abfolge der Zeitstempel zunimmt.

Da in unmittelbarer Zukunft liegende Sollwerte aufgrund eines nahen Prognosezeitpunkts sehr genau berechnet werden können und Sollwerte, die in entfernter Zukunft liegen, verhältnismäßig weniger genau bestimmt werden können, ist es also vorteilhaft, die genaueren Werte im Falle eines Ausfalls der Datenverbindung auch möglichst präzise, also mit einer hohen "Auflösung", also einer hohen Aktualisierungsrate des Reglersollwerts, zur Regelung einzusetzen und auf diese hohe Aktualisierungsrate zu verzichten, sobald die zukünftigen Sollwerte ohnehin eine verhältnismäßig geringere Zuverlässigkeit aufweisen.

Gemäß einer weiteren Ausführungsform ist den hinterlegten zukünftigen Sollwerten eine Reihenfolge zugeordnet. Ferner wird dann nach Ablauf der vordefinierten Zeitdauer, in der nach dem Empfangen des Datenpakets kein weiteres Datenpaket empfangen wird sowie nach jedem erneuten Ablauf der vordefinierten Dauer oder nach jedem Ablauf einer weiteren vordefinierten Zeitdauer oder nach jedem Ablauf einer zeitlich zunehmenden Zeitdauer jeweils einer der zukünftigen Sollwerte entsprechend seiner Reihenfolge ausgegeben. Dies geschieht solange kein weiteres Datenpaket empfangen wird.

Diese Ausführungsform spart gegenüber der vorgenannten Ausführungsform das Übertragen von Zeitstempeln für die Sollwerte, sodass das Datenvolumen eines Datenpakets vergleichsweise kleiner wählbar ist. Hierbei wird allerdings in Kauf genommen, dass eine Vorgabe, zu welchem Zeitpunkt ein Sollwert als Reglersollwert ausgegeben werden soll, von der Vorrichtung anhand der vordefinierten Zeitdauer, einer weiteren vordefinierten Zeitdauer oder einer vordefinierten zeitlich zunehmenden Zeitdauer bestimmt wird und nicht mehr vom Übertragungsnetzbetreiber individuell vorgegeben werden kann.

Gemäß einer weiteren Ausführungsform wird im Falle, dass alle hinterlegten zukünftigen Sollwerte bereits als Reglersollwerte ausgegeben wurden und kein weiteres Datenpaket empfangen wurde, ein vordefinierter Standardwert, der auch Default-Wert genannt werden kann, als Reglersollwert ausgegeben wird. Dieser vordefinierte Standardwert wird also als Reglersollwert ausgegeben, bis ein weiteres Datenpaket empfangen wird.

Es wird davon ausgegangen, dass die Anzahl der zukünftigen Sollwerte, die im Speicher hinterlegt sind, derart gewählt ist, dass ein kompletter Zeitraum mit einer durchschnittlichen Ausfalldauer, in der eine Datenverbindung zwischen dem Netzbetreiber und dem Energieerzeuger, zum Beispiel der Windenergieanlage und dem Windpark, oder dem Cluster-Regler gestört ist, überbrückt werden kann. Nur der Fall, dass ein außergewöhnlich langer Zeitraum eines gestörten Datenübertragungsnetzes auftritt, führt demnach zum Ausgeben des vordefinierten Standardwerts als Reglersollwert, um auch in diesem Fall zumindest einen definierten Zustand der Windenergieanlagen oder des Windparks zu gewährleisten.

Gemäß einer weiteren Ausführungsform ist die vordefinierte Zeitdauer, die weitere vordefinierte Zeitdauer oder die Sollwertgültigkeitsdauern derart gewählt, dass diese maximal einer Minute, maximal zwei Minuten oder maximal fünf Minuten entspricht. Außerdem werden mit jedem Datenpaket mindestens zehn, mindestens zwanzig oder mindestens fünfzig zukünftige Sollwerte empfangen.

Hierdurch ist gewährleistet, auch im Falle des Ausfalls der Kommunikation mit dem Übertragungsnetzbetreiber weiterhin eine den Bedarfsanforderungen des Übertragungsnetzes möglichst gut genügende Regelung der Windenergieanlagen oder des Windparks zu gewährleisten.

Außerdem betrifft die Erfindung ein System mit einem Regler, der ein Regler eines Energieerzeugers, zum Beispiel einer Windenergieanlage oder eines Windparks, oder eines Cluster-Reglers ist und die Vorrichtung gemäß einem der genannten Ausführungsformen umfasst. Vorzugsweise umfasst das System eine Sollwertbestimmungsvorrichtung, die beispielsweise Bestandteil eines Leitsystems eines Übertragungsnetzbetreibers ist, wobei die Sollwertbestimmungseinheit eingerichtet ist, aktuelle und zukünftige Sollwerte für mindestens einen Energieerzeuger, zum Beispiel einen Windpark oder mindestens eine Windenergieanlage, oder einen Cluster-Regler zu bestimmen und Datenpakete mit aktuellen und zukünftigen Sollwerten zu erzeugen und über eine Datenverbindung des Systems an den Regler zu übertragen.

Weitere Ausführungsformen ergeben sich anhand der in den Figuren näher erläuterten Ausführungsbeispiele.
- Fig. 1: zeigt eine Windenergieanlage,
- Fig. 2: einen Windpark, der über einen Windparkregler mit einer Leitzentrale verbunden ist,
- Fig. 3: einen Windpark, der über einen Cluster-Regler und einen Windparkregler mit einer Leitzentrale verbunden ist,
- Fig. 4: ein Ausführungsbeispiel der erfindungsgemäßen Vorrichtung und
- Fig. 5: den Ablauf eines Ausführungsbeispiels des Verfahrens.

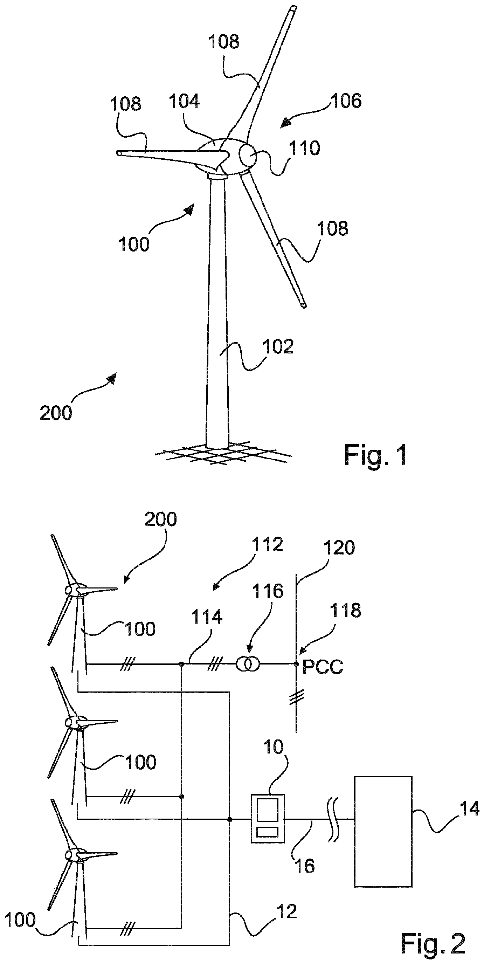

Fig. 1 zeigt eine schematische Darstellung eines Energieerzeugers 200, nämlich eine Windenergieanlage 100, gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor 106 oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park 112 hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung jeder einzelnen Windenergieanlage 100 zeigt, obwohl natürlich eine Steuerung vorhanden sein kann. Auch kann beispielsweise das Parknetz 114 anders gestaltet sein, in dem beispielsweise auch ein Transformator 116 am Ausgang jeder Windenergieanlage 100 vorhanden ist, um nur ein anderes Ausführungsbeispiel zu nennen.

Ferner zeigt Fig. 2 einen Regler 10, der auch als Windparkregler, SCADA-Computer oder SCADA-Rechner bezeichnet wird und über ein Bussystem 12 mit jeder einzelnen Windenergieanlage 100 verbunden ist. Außerdem weist Fig. 2 eine Leitzentrale 14 eines Netzbetreibers auf, wobei die Leitzentrale 14 und der Regler 10 über eine Verbindung 16 miteinander verbunden sind. Die Verbindung 16 entspricht zum Beispiel einer TCP/IP-Verbindung.

In Fig. 2 ist mit der Leitzentrale 14 exemplarisch nur ein einzelner Windpark 112 verbunden. Tatsächlich sind mit der Leitzentrale 14 mehrere Windparks 112 mit jeweils mehreren Windenergieanlagen 100 und/oder Energieerzeugern 200 verbunden, was hier jedoch zur besseren Übersicht nicht dargestellt ist. Ferner sind in Fig. 2 drei Windenergieanlagen 100 dargestellt, die mit einem Regler 10 verbunden sind und somit als Verbund der Windenergieanlagen 100 ebenfalls als ein Energieerzeuger 200 betrachtet werden können. Es sind neben dem Windpark 112 auch einzelne Windenergieanlagen 100 denkbar, die jeweils einen eigenen Regler 10 aufweisen, der über eine Verbindung 16 wiederum mit der Leitzentrale 14 verbunden ist. Die Verbindung 16 zwischen dem Computer 10 und der Leitzentrale 14 ist hier im Verhältnis sehr kurz dargestellt, kann tatsächlich aber mehrere zehn oder sogar mehrere hundert Kilometer lang sein.

Ferner ist die Verbindung 16 als direkte Verbindung zwischen dem Regler 10 und der Leitzentrale 14 eingezeichnet, wobei natürlich eine Vielzahl weiterer elektronischer Bauteile aus dem Bereich der Nachrichtenübertragung oder Datenübertragung in einer realen Übertragungsleitung zwischengeschaltet sind. Die Verbindung 16 ist hier als Leitung dargestellt, wobei auch diese Darstellung exemplarisch ist und eine Verbindung 16 auch Funkstrecken umfassen kann.

Die Verbindung 16 zwischen der Leitzentrale 14 und dem Regler 10 des Windparks dient, um Sollwerte, beispielsweise Leistungssollwerte, von der Leitzentrale 14 zum Windparkregler 10 zu übertragen. Der Regler 10 regelt dann aufgrund dieser Sollwerte beispielsweise den Betrag an elektrischer Energie, der von den Windenergieanlagen 100 in das Netz 114 eingespeist wird.

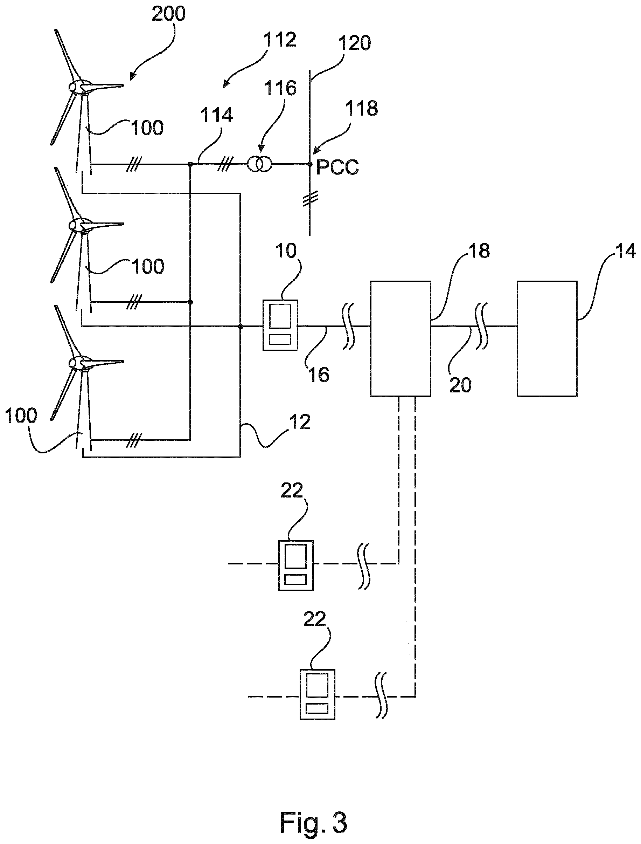

In Fig. 3, die im Wesentlichen der Fig. 2 entspricht, ist zusätzlich ein Cluster-Regler 18 dargestellt, der über eine Verbindung 20 mit der Leitzentrale 14 verbunden ist. Über die Verbindung 16 ist der Cluster-Regler 18 mit dem Windparkregler 10 verbunden. Am Cluster-Regler 18 sind außerdem weitere Windparkregler 22 weiterer Windparks 112 oder weitere Energieerzeuger 200 angeschlossen. Vorliegend wird dann ein - bereits im Hinblick auf Fig. 2 genannter - Sollwert beispielsweise für die Leistungsregelung von der Leitzentrale 14 des Versorgungsnetz- oder Übertragungsnetzbetreibers an den Cluster-Regler 18 übertragen. Der Cluster-Regler 18 gibt diesen Sollwert dann an die Regler 10, 22 jeweils angepasst für die entsprechenden Windparkregler 10, 22 weiter, um mehrere Windparks 112 oder auch weitere Energieerzeuger 200 mit Sollwerten zu beaufschlagen. Der Cluster-Regler 18 dient hier beispielsweise zur Regelung aller Energieerzeuger 200, die in einem Teilnetz des Versorgungsnetzes 120 oder Übertragungsnetzes, das auch Cluster genannt wird, Energie einspeisen. Mit der Leitzentrale 14 ist vorliegend beispielsweise ein Cluster-Regler 18 verbunden, wobei gemäß anderen Ausführungsbeispielen mehrere Cluster-Regler 18 mit der Leitzentrale 14 verbunden sein können.

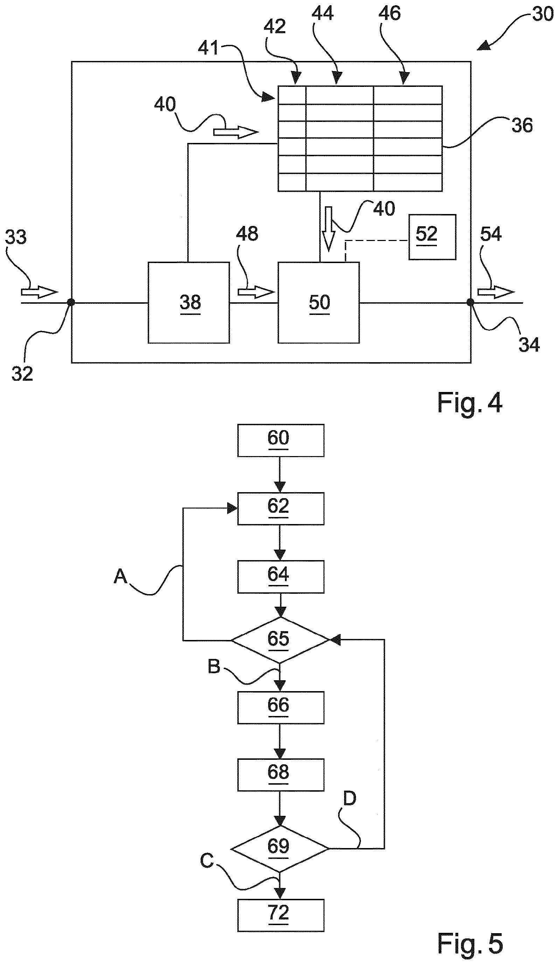

Fig. 4 zeigt ein Ausführungsbeispiel der erfindungsgemäßen Vorrichtung, wie sie Bestandteil beispielsweise des Windparkreglers 10 oder eines anderen Energieerzeugers 200 gemäß einer der vorgenannten Ausführungsformen, aber auch gemäß des Cluster-Reglers 18 gemäß einer weiteren Ausführungsform ist.

Die Vorrichtung 30 weist einen Dateneingang 32 und einen Datenausgang 34 auf. Ferner ist ein Speicher 36 vorgesehen. Der Dateneingang 32 dient zum Empfangen von Datenpaketen 33 mit aktuellen und zukünftigen Sollwerten. Das Datenpaket 33, das über den Dateneingang 32 empfangen wird, wird einer Aufteileinheit 38, die auch Extraktionseinheit genannt werden kann, zugeführt. In der Aufteileinheit 38 wird das Datenpaket 33 in mehrere zukünftige Sollwerte 40 und einen aktuellen Sollwert 48 aufgeteilt, also ein aktueller Sollwert 48 und mehrere zukünftige Sollwerte 40 aus dem Datenpaket 33 extrahiert. Die aktuellen Sollwerte 48 werden dann an einen Speicher 36 übergeben und dort hinterlegt, also gespeichert.

Der Speicher 36 speichert gemäß einem besonders bevorzugten Ausführungsbeispiel die zukünftigen Sollwerte 40 gemäß einer Tabelle, wobei jede Zeile einem zukünftigen Sollwert 40 zugeordnet ist. Vorliegend ist daher der Speicher 36 als eine Art Tabelle dargestellt. In der linken Spalte 42 des Speichers 36 ist die Rangfolge des jeweiligen zukünftigen Sollwerts 40 einer Zeile hinterlegt. In der daneben liegenden zweiten Spalte 44 ist dann der Sollwert selbst hinterlegt und in der Spalte 46 ist ein Zeitstempel oder eine Sollwertgültigkeitsdauer für den Sollwert hinterlegt.

Der aktuelle Sollwert 48, der von der Aufteileinheit 38 aus einem Datenpaket 33 extrahiert wurde, wird direkt an einen Entscheider 50 angelegt. Der Entscheider 50 ist mit dem Datenausgang 34 verbunden und entscheidet, welcher Reglersollwert am Ausgang 34 ausgegeben wird. Der Entscheider 50 wird hierzu in Abhängigkeit einer Steuerung 52 gesteuert.

Die Steuerung 52 misst hierzu eine Zeitdauer und vergleicht diese mit einer vordefinierten Zeitdauer, zum Beispiel eine Sollwertgültigkeitsdauer. Im Einzelnen wird in der Steuerung 52 die Zeitdauer vom Eingang des Datenpakets 33 am Dateneingang 32 gemessen. Wird innerhalb einer vordefinierten Zeitdauer ein weiteres Datenpaket 33 am Dateneingang 32 empfangen, so wird durch Ansteuerung des Entscheiders 50 durch die Steuerung 52 der Entscheider 50 veranlasst, den aktuellen Sollwert 48 des weiteren Datenpakets 33 über den Entscheider 50 am Datenausgang 34 auszugeben. Wird nach Ablauf der vordefinierten Zeitdauer kein weiteres Datenpaket 33 über den Dateneingang 32 empfangen, so wird durch Ansteuern mit der Steuerung 52 über den Entscheider 50 ein erster zukünftiger Sollwert 40 aus dem Speicher 36 ausgelesen und am Ausgang 34 als Reglersollwert 54 für die Regelung einer Windenergieanlage 100 oder eines Windparks 112 ausgegeben. Im Falle, dass die Vorrichtung 30 Bestandteil eines Windparkreglers 10 ist, wird beispielsweise der Reglersollwert 54 in weitere Reglersollwerte für die einzelnen Windenergieanlagen 100 aufgeteilt.

Die Steuerung 52, die Aufteileinheit 38, der Speicher 36 sowie der Entscheider 50 sind hier als separate Komponenten zur besseren Übersicht und zum besseren Verständnis dargestellt. Diese sind gemäß einem weiteren hier nicht dargestellten Ausführungsbeispiel durch einen einzelnen Prozessor eines Mikrocontrollers oder einen Mikrocontroller selbst realisiert sein.

In Fig. 5 wird der Ablauf eines Ausführungsbeispiels des Verfahrens dargestellt. Im Schritt 60 wird ein Datenpaket 33 empfangen und im Schritt 62 aus dem Datenpaket 33 extrahierte zukünftige Sollwerte 40 in einem Speicher 36 gespeichert. Im Schritt 64 wird der aktuelle Sollwert 48, der ebenfalls aus dem Datenpaket 33 extrahiert wurde, am Datenausgang 34 ausgegeben. Im Schritt 65 wird überprüft, ob innerhalb einer vorbestimmten Zeitdauer ein neues Datenpaket 33 empfangen wurde.

Für den Fall A, dass ein neues Datenpaket 33 innerhalb der vorbestimmten Zeit empfangen wurde, beginnt das Verfahren in einer Schleife wieder bei Schritt 62. Für den Fall B, dass kein neues Datenpaket 33 innerhalb des vorbestimmten Zeitraums empfangen wurde, wird im Schritt 66 ein zukünftiger Sollwert 40 aus dem Speicher 36 ausgelesen und im Schritt 68 wird dieser Sollwert 40 am Ausgang 34 ausgegeben. Daraufhin wird in einem Schritt 69 geprüft, ob der aus dem Speicher ausgelesene Sollwert der letzte gespeicherte zukünftige Sollwert 40 ist. Für den Fall C, dass neben diesem ausgegebenen zukünftigen Sollwert 40 keine weiteren Sollwerte mehr gespeichert sind, wird in einem Schritt 72 ein Standardwert ausgegeben, bis ein weiteres Datenpaket 33 empfangen wird. Für den Fall D, dass weitere zukünftige Sollwerte 40 im Speicher 36 hinterlegt sind, wird im Falle, dass innerhalb des vordefinierten Zeitraums kein neues Datenpaket 33 empfangen wurde, was erneut im Schritt 65 geprüft wird, ein nächster zukünftiger Sollwert 40 aus dem Speicher 36 im Schritt 66 ausgelesen und im Schritt 68 ausgegeben.

Dank dem Verfahren und der Vorrichtung 30 werden somit stets neue angepasste Reglersollwerte 54 ausgegeben, auch wenn eine Datenverbindung 16, 20 zwischen einer Leitzentrale 14, einem Cluster-Regler 18, einem Regler eines Energieerzeugers 200 und/oder einem Windparkregler 10 ausfällt.

## Patentansprüche

1. Verfahren zum Ausgeben eines Reglersollwerts (54) für mindestens einen Energieerzeuger (200), insbesondere mindestens eine Windenergieanlage (100) oder mindestens einen Windpark (112), oder mindestens einen Cluster-Regler (18),
**dadurch gekennzeichnet, dass**
das Verfahren die Schritte umfasst:
- Empfangen (60) eines Datenpakets (33), das einen aktuellen Sollwert (48) und mehrere zukünftige Sollwerte (40) umfasst, mit einem Dateneingang (32),
- Hinterlegen (62) der zukünftigen Sollwerte (40) des empfangenen Datenpakets (33) in einem Speicher (36),
- Ausgeben (64) des aktuellen Sollwerts (48) des Datenpakets (33) mit einem Datenausgang (34) als Reglersollwert (54) für den Energieerzeuger (200), insbesondere die mindestens eine Windenergieanlage (100) oder den mindestens einen Windpark (112), oder den Cluster-Regler (18), wobei
- nach Ablauf einer vordefinierten Zeitdauer, in der nach dem Empfangen (60) des Datenpakets (33) kein weiteres Datenpaket (33) empfangen wird, ein erster der hinterlegten zukünftigen Sollwerte (40) mit dem Datenausgang (34) als nächster Reglersollwert (54) ausgegeben wird.

2. Verfahren nach Anspruch 1, wobei die in dem Speicher (36) hinterlegten zukünftigen Sollwerte (40) nach jedem Empfangen (60) eines weiteren Datenpakets (33) durch die zukünftigen Sollwerte (40) des weiteren Datenpakets (33) überschrieben werden.

3. Verfahren nach Anspruch 1 oder 2, wobei jedem Sollwert (40, 48) jeweils eine Sollwertgültigkeitsdauer zugeordnet ist und nach Ablauf der vordefinierten Zeitdauer, die der Sollwertgültigkeitsdauer des aktuellen Sollwerts (48), der zur Zeit als Reglersollwert (54) ausgegeben wird, entspricht, in der nach dem Empfangen (60) des Datenpakets (33) kein weiteres Datenpaket (33) empfangen wird, die hinterlegten zukünftigen Sollwerte (40) mit dem Datenausgang (34) für eine Dauer, die der jeweiligen Sollwertgültigkeitsdauer des jeweiligen Sollwerts (40, 48) entspricht, als Reglersollwert (54) ausgegeben werden, solange kein weiteres Datenpaket (33) empfangen wird.

4. Verfahren nach Anspruch 1 oder 2, wobei jedem hinterlegten zukünftigen Sollwert (40) ein Zeitstempel zugeordnet ist und nach Ablauf der vordefinierten Zeitdauer, in der nach dem Empfangen (60) des Datenpakets (33) kein weiteres Datenpaket (33) empfangen wird, die hinterlegten zukünftigen Sollwerte (40) mit dem Datenausgang (34) nacheinander jeweils zu dem dem Zeitstempel entsprechenden Zeitpunkt als nächster Reglersollwert (54) ausgegeben werden, solange kein weiteres Datenpaket (33) empfangen wird.

5. Verfahren nach Anspruch 4, wobei die Zeitstempel unterschiedlichen Zeitpunkten entsprechen und der zeitliche Abstand der den Zeitstempeln entsprechenden Zeitpunkte entsprechend ihrer zeitlichen Abfolge zunimmt.

6. Verfahren nach Anspruch 1 oder 2, wobei den hinterlegten zukünftigen Sollwerten (40) eine Reihenfolge zugeordnet ist und nach Ablauf der vordefinierten Zeitdauer, in der nach dem Empfangen (60) des Datenpakets (33) kein weiteres Datenpaket (33) empfangen wird sowie nach jedem erneuten Ablauf der vordefinierten Zeitdauer, nach jedem Ablauf einer weiteren vordefinierten Zeitdauer oder nach jedem Ablauf einer zeitlich zunehmenden Zeitdauer jeweils einer der Sollwerte (40) entsprechend seiner Reihenfolge ausgegeben wird, solange kein weiteres Datenpaket empfangen wird.

7. Verfahren nach einem der vorhergehenden Ansprüche, wobei im Falle, dass alle hinterlegten zukünftigen Sollwerte (40) nacheinander als Reglersollwerte (54) ausgegeben wurden, ein vordefinierter Standardwert als Reglersollwert (54) ausgegeben wird.

8. Verfahren nach einem der vorhergehenden Ansprüche, wobei die vordefinierte Zeitdauer und/oder die weitere vordefinierte Zeitdauer maximal einer Minute, maximal zwei Minuten oder maximal fünf Minuten entspricht und/oder mindestens zehn, mindestens zwanzig oder mindestens fünfzig zukünftige Sollwerte (40) mit einem Datenpaket (33) empfangen werden.

9. Vorrichtung zum Ausgeben eines Reglersollwerts (54) für mindestens einen Energieerzeuger (200), insbesondere mindestens eine Windenergieanlage (100) oder mindestens einen Windpark, oder mindestens einen Cluster-Regler (18), insbesondere zum Ausführen des Verfahrens nach einem der Ansprüche 1 bis 8,
**dadurch gekennzeichnet, dass**
dir Vorrichtung umfasst:
- einen Dateneingang (32) zum Empfangen (60) eines Datenpakets (33), das einen aktuellen Sollwert (48) und mehrere zukünftige Sollwerte (40) umfasst,
- einen Speicher (36) zum Hinterlegen der zukünftigen Sollwerte (40) des Datenpakets (33),
- einen Datenausgang (34) zum Ausgeben (64) des aktuellen Sollwerts (48) des Datenpakets (33) als Reglersollwert (54) für den Energieerzeuger (200), insbesondere die mindestens eine Windenergieanlage (100) oder den mindestens einen Windpark (112), oder den Cluster-Regler (18),
- eine Steuereinheit (52), die eingerichtet ist, nach Ablauf einer vordefinierten Zeitdauer, in der nach dem Empfangen (60) des Datenpakets (33) kein weiteres Datenpaket (33) empfangen wird, einen ersten hinterlegten zukünftigen Sollwert (40) mit dem Datenausgang (34) als nächsten Reglersollwert (54) auszugeben.

10. Vorrichtung nach Anspruch 9, wobei die Steuereinheit (52) eingerichtet ist, die in dem Speicher (36) hinterlegten zukünftigen Sollwerte (40) nach jedem Empfangen (60) eines weiteren Datenpakets (33) durch die zukünftigen Sollwerte (40) des weiteren Datenpakets (33) zu überschreiben.

11. Vorrichtung nach Anspruch 9 oder 10, wobei jedem hinterlegten zukünftigen Sollwert (40) ein Zeitstempel oder jedem Sollwert (40, 48) eine Sollwertgültigkeitsdauer zugeordnet ist und die Steuereinheit (52) eingerichtet ist, die Sollwerte (40, 48) für eine Dauer entsprechend ihres Zeitstempels oder ihrer Sollwertgültigkeitsdauer am Datenausgang (34) als Reglersollwert (54) auszugeben, wobei insbesondere die Zeitstempel unterschiedlichen Zeitpunkten entsprechen und der zeitliche Abstand der den Zeitstempeln entsprechenden Zeitpunkte entsprechend ihrer zeitlichen Abfolge zunimmt.

12. Vorrichtung nach Anspruch 11, wobei den hinterlegten zukünftigen Sollwerten (40) eine Reihenfolge zugeordnet ist und die Steuereinheit (52) eingerichtet ist, nach Ablauf der vordefinierten Zeitdauer, in der nach dem Empfangen (60) des Datenpakets (33) kein weiteres Datenpaket (33) empfangen wird, sowie nach jedem erneuten Ablauf der vordefinierten Dauer, nach jedem Ablauf einer weiteren vordefinierten Zeitdauer oder nach jedem Ablauf einer zeitlich zunehmenden Zeitdauer, jeweils einen der Sollwerte (40) entsprechend seiner Reihenfolge auszugeben, solange kein weiteres Datenpaket (33) empfangen wird .

13. Vorrichtung nach einem der Ansprüche 9 bis 12, wobei die Vorrichtung (30) im Bereich des Reglers (10) eines Energieerzeugers (200), insbesondere eines Windparks (112), oder im Bereich eines Cluster-Reglers (18) angeordnet ist.

14. System mit einer Vorrichtung (30) nach einem der Ansprüche 9 bis 13 und einem Regler (10) eines Energieerzeugers (200), einem Windparkregler (10) und/oder einem Cluster-Regler (18), wobei die Vorrichtung (30) in den Regler (10) des Energieerzeugers (200), den Windparkregler (10) und/oder den Cluster-Regler (18) integriert ist.

15. System nach Anspruch 14, wobei das System zusätzlich eine Leitzentrale (14) umfasst, die eingerichtet ist, aktuelle Sollwerte (48) und zukünftige Sollwerte (40) zu ermitteln, Datenpakete (33) mit jeweils einem aktuellen Sollwert (48) und mehreren zukünftigen Sollwerten (40) zu erzeugen und über eine Datenverbindung (16, 20) an den Regler (10) eines Energieerzeugers (200), insbesondere den Windparkregler (10), und/oder den Cluster-Regler (18) zu übertragen.

## Claims

1. A method for outputting a controller setpoint (54) for at least one power generator (200), in particular at least one wind power installation (100) or at least one windfarm (112), or at least one cluster controller (18)
**characterized in that**
the method comprising the steps:
- receiving (60) a data packet (33) comprising a current setpoint (48) and a plurality of future setpoints (40), with a data input (32),
- storing (62) the future setpoints (40) of the received data packet (33) in a memory (36),
- outputting (64) the current setpoint (48) of the data packet (33) with a data output (34) as a controller setpoint (54) for the power generator (200), in particular the at least one wind power installation (100) or the at least one windfarm (112), or the cluster controller (18), wherein,
- after the expiry of a predefined time period in which, after the reception (60) of the data packet (33), no further data packet (33) is received, a first of the stored future setpoints (40) is output with the data output (34) as the next controller setpoint (54).

2. The method as claimed in claim 1, wherein the future setpoints (40) stored in the memory (36) are overwritten with the future setpoints (40) of the further data packet (33) after each reception (60) of a further data packet (33).

3. The method as claimed in claim 1 or 2, wherein a setpoint validity period is allocated in each case to each setpoint (40, 48) and, after the expiry of the predefined time period which corresponds to the setpoint validity period of the current setpoint (48) which is currently output as the controller setpoint (54), in which, after the reception (60) of the data packet (33), no further data packet (33) is received, the stored future setpoints (40) are output with the data output (34) for a time period which corresponds to the respective setpoint validity period of the respective setpoint (40, 48) as the controller setpoint (54), provided that no further data packet (33) is received.

4. The method as claimed in claim 1 or 2, wherein a timestamp is allocated to each stored future setpoint (40) and, after the expiry of the predefined time period in which, after the reception (60) of the data packet (33), no further data packet (33) is received, the stored future setpoints (40) are output successively with the data output (34) in each case at the time corresponding to the timestamp as the next controller setpoint (54), provided that no further data packet (33) is received.

5. The method as claimed in claim 4, wherein the timestamps correspond to different times and the time interval of the times corresponding to the timestamps increases according to their temporal sequence.

6. The method as claimed in claim 1 or 2, wherein a sequence is allocated to the stored future setpoints (40) and, after the expiry of the predefined time period in which, after the reception (60) of the data packet (33), no further data packet (33) is received, and after each further expiry of the predefined time period, after each expiry of a further predefined time period or after each expiry of a temporally increasing time period, one of the setpoints (40) is output in each case according to its sequence, provided that no further data packet is received.

7. The method as claimed in one of the preceding claims, wherein, in the case where all stored future setpoints (40) are output successively as controller setpoints (54), a predefined standard value is output as the controller setpoint (54).

8. The method as claimed in one of the preceding claims, wherein the predefined time period and/or the further predefined time period corresponds to a maximum of one minute, a maximum of two minutes or a maximum of five minutes and/or at least ten, at least twenty or at least fifty future setpoints (40) are received with a data packet (33).

9. A device for outputting a controller setpoint (54) for at least one power generator (200), in particular at least one wind power installation (100) or at least one windfarm (112), or at least one cluster controller (18), in particular to carry out the method as claimed in one of claims 1 to 8,
**characterized in that**
the device comprising:
- a data input (32) for receiving (60) a data packet (33) comprising a current setpoint (48) and a plurality of future setpoints (40),
- a memory (36) for storing the future setpoints (40) of the data packet (33),
- a data output (34) for outputting (64) the current setpoint (48) of the data packet (33) as a controller setpoint (54) for the power generator (200), in particular the at least one wind power installation (100) or the at least one windfarm (112), or the cluster controller (18),
- a control unit (52) which is configured, after the expiry of a predefined time period in which, after the reception (60) of the data packet (33), no further data packet (33) is received, to output a first stored future setpoint (40) with the data output (34) as the next controller setpoint (54).

10. The device as claimed in claim 9, wherein the control unit (52) is configured to overwrite the future setpoints (40) stored in the memory (36) with the future setpoints (40) of the further data packet (33) after each reception (60) of a further data packet (33).

11. The device as claimed in claim 9 or 10, wherein a timestamp is allocated to each stored future setpoint (40) or a setpoint validity period is allocated to each setpoint (40, 48) and the control unit (52) is configured to output the setpoints (40, 48) for a time period corresponding to their timestamp or their setpoint validity period at the output (34) as the controller setpoint (54), wherein in particular the timestamps correspond to different times and the time interval of the times corresponding to the timestamps increases according to their temporal sequence.

12. The device as claimed in claim 11, wherein a sequence is allocated to the stored future setpoints (40) and the control unit (52) is configured, after the expiry of the predefined time period in which, after the reception (60) of the data packet (33), no further data packet (33) is received, and after each further expiry of the predefined time period, after each expiry of a further predefined time period or after each expiry of a temporally increasing time period, to output one of the setpoints (40) in each case according to its sequence, provided that no further data packet (33) is received.

13. The device as claimed in one of claims 9 to 12, wherein the device (30) is arranged in the vicinity of the controller (10) of a power generator (200), in particular a windfarm (112), or in the vicinity of a cluster controller (18).

14. A system having a device (30) as claimed in one of claims 9 to 13 and a controller (10) of a power generator (200), a windfarm controller (10) and/or a cluster controller (18), wherein the device (30) is integrated into the controller (10) of the power generator (200), the windfarm controller (10) and/or the cluster controller (18).

15. The system as claimed in claim 14, wherein the system additionally comprises a control center (14) which is configured to determine current setpoints (48) and future setpoints (40), to generate data packets (33) in each case with a current setpoint (48) and a plurality of future setpoints (40) and transmit them via a data connection (16, 20) to the controller (10) of a power generator (200), in particular the windfarm controller (10), and/or the cluster controller (18).

## Revendications

1. Procédé pour fournir une valeur de régulation de consigne (54) pour au moins un générateur d'énergie (200), en particulier au moins une éolienne (100) ou au moins un parc éolien (112), ou au moins un régulateur de cluster (18),
**caractérisé en ce que**
le procédé comprend les étapes :
- de réception (60) d'un paquet de données (33), qui comprend une valeur de consigne actuelle (48) et plusieurs valeurs de consigne futures (40), avec une entrée de données (32),
- d'enregistrement (62) des valeurs de consigne futures (40) du paquet de données (33) reçu dans une mémoire (36),
- de fourniture (64) de la valeur de consigne actuelle (48) du paquet de données (33) avec une sortie de données (34) en tant que valeur de régulation de consigne (54) pour le générateur d'énergie (200), en particulier l'au moins une éolienne (100) ou l'au moins un parc éolien (112) ou le régulateur de cluster (18), dans lequel
- après expiration d'une durée prédéfinie, lors de laquelle aucun autre paquet de données (33) n'est reçu après la réception (60) du paquet de données (33), une première des valeurs de consigne futures (40) enregistrées est fournie avec la sortie de donnés (34) en tant que prochaine valeur de régulation de consigne (54) .

2. Procédé selon la revendication 1, dans lequel des valeurs de consigne futures (40) enregistrées dans la mémoire (36) sont écrasées par les valeurs de consigne futures (40) de l'autre paquet de données (33) après chaque réception (60) d'un autre paquet de données (33).

3. Procédé selon la revendication 1 ou 2, dans lequel respectivement une durée de validité de valeur de consigne est associée à chaque valeur de consigne (40, 48) et après expiration de la durée prédéfinie, qui correspond à la durée de validité de valeur de consigne de la valeur de consigne actuelle (48), qui est fournie à présent en tant que valeur de régulation de consigne (54), dans laquelle aucun autre paquet de données (33) n'est reçu après la réception (60) du paquet de données (33), les valeurs de consigne futures (40) enregistrées sont fournies avec la sortie de données (34) pour une durée, qui correspond à la durée de validité de valeur de consigne respective de la valeur de consigne (40, 48) respective, en tant que valeur de régulation de consigne (54) tant qu'aucun autre paquet de données (33) n'est reçu.

4. Procédé selon la revendication 1 ou 2, dans lequel un poinçon temporel est associé à chaque valeur de consigne future (40) enregistrée et après expiration de la durée prédéfinie, lors de laquelle aucun autre paquet de données (33) n'est reçu après la réception (60) du paquet de données (33), les valeurs de consigne futures (40) enregistrées sont fournies avec la sortie de données (34) les unes après les autres respectivement au moment correspondant au poinçon temporel en tant que prochaine valeur de régulation de consigne (54) tant qu'aucun autre paquet de données (33) n'est reçu.

5. Procédé selon la revendication 4, dans lequel les poinçons temporels correspondent à différents moments et l'écart temporel des moments correspondant aux poinçons temporels augmente conformément à leur succession dans le temps.

6. Procédé selon la revendication 1 ou 2, dans lequel une séquence est associée aux valeurs de consigne futures (40) enregistrées et après expiration de la durée prédéfinie, lors de laquelle aucun autre paquet de données (33) n'est reçu après la réception (60) du paquet de données (33), ainsi qu'après chaque nouvelle expiration de la durée prédéfinie, après chaque expiration d'une autre durée prédéfinie ou après chaque expiration d'une durée augmentant dans le temps, respectivement une des valeurs de consigne (40) est fournie conformément à sa succession tant qu'aucun autre paquet de données n'est reçu.

7. Procédé selon l'une quelconque des revendications précédentes, dans lequel dans le cas où toutes les valeurs de consigne futures (40) enregistrées ont été fournies les unes après les autres en tant que valeurs de régulation de consigne (54), une valeur standard prédéfinie est fournie en tant que valeur de régulation de consigne (54).

8. Procédé selon l'une quelconque des revendications précédentes, dans lequel la durée prédéfinie et/ou l'autre durée prédéfinie correspondent au maximum à une minute, au maximum à deux minutes ou au maximum à cinq minutes et/ou au moins dix, au moins vingt ou au moins cinquante valeurs de consigne futures (40) sont reçues avec un paquet de données (33).

9. Dispositif pour fournir une valeur de régulation de consigne (54) pour au moins un générateur d'énergie (200), en particulier au moins une éolienne (100) ou au moins un parc éolien ou au moins un régulateur de cluster (18), en particulier pour exécuter le procédé selon l'une quelconque des revendications 1 à 8,
**caractérisé en ce que**
le dispositif comprend :
- une entrée de données (32) pour recevoir (60) un paquet de données (33), qui comprend une valeur de consigne actuelle (48) et plusieurs valeurs de consigne futures (40),
- une mémoire (36) pour enregistrer les valeurs de consigne futures (40) du paquet de données (33),
- une sortie de données (34) pour fournir (64) la valeur de consigne actuelle (48) du paquet de données (33) en tant que valeur de régulation de consigne (54) pour le générateur d'énergie (200), en particulier l'au moins une éolienne (100) ou l'au moins un parc éolien (112), ou le régulateur de cluster (18),
- une unité de commande (52), qui est mise au point pour fournir, après expiration d'une durée prédéfinie, lors de laquelle aucun autre paquet de données (33) n'est reçu après la réception (60) du paquet de données (33), une première valeur de consigne future (40) enregistrée avec la sortie de données (34) en tant que prochaine valeur de régulation de consigne (54) .

10. Dispositif selon la revendication 9, dans lequel l'unité de commande (52) est mise au point pour écraser les valeurs de consigne futures (40) enregistrées dans la mémoire (36) après chaque réception (60) d'un autre paquet de données (33) par les valeurs de consigne futures (40) de l'autre paquet de données (33).

11. Dispositif selon la revendication 9 ou 10, dans lequel un poinçon temporel est associé à chaque valeur de consigne future (40) enregistrée ou une durée de validité de valeur de consigne est associée à chaque valeur de consigne (40, 48) et l'unité de commande (52) est mise au point pour fournir les valeurs de consigne (40, 48) pour une durée de manière correspondante à son poinçon temporel ou à sa durée de validité de valeur de consigne au niveau de la sortie de données (34) en tant que valeur de régulation de consigne (54), dans lequel en particulier les poinçons temporels correspondent à différents moments et l'écart temporel des moments correspondant aux poinçons temporels augmente de manière correspondante à leur succession dans le temps.

12. Dispositif selon la revendication 11, dans lequel une séquence est associée aux valeurs de consigne futures (40) enregistrées et l'unité de commande (52) est mise au point pour fournir, après expiration de la durée prédéfinie, lors de laquelle aucun autre paquet de données (33) n'est reçu après la réception (60) du paquet de données (33) ainsi qu'après chaque nouvelle expiration de la durée prédéfinie, après chaque expiration d'une autre durée prédéfinie ou après chaque expiration d'une durée augmentant dans le temps, respectivement une des valeurs de consigne (40) de manière correspondante à sa succession tant qu'aucun autre paquet de données (33) n'est reçu.

13. Dispositif selon l'une quelconque des revendications 9 à 12, dans lequel le dispositif (30) est disposé dans la zone du régulateur (10) d'un générateur d'énergie (200), en particulier d'un parc éolien (112), ou dans la zone d'un régulateur de cluster (18).

14. Système avec un dispositif (30) selon l'une quelconque des revendications 9 à 13 et un régulateur (10) d'un générateur d'énergie (200), un régulateur de parc éolien (10) et/ou un régulateur de cluster (18), dans lequel le dispositif (30) est intégré dans le régulateur (10) du générateur d'énergie (200), le régulateur de parc éolien (10) et/ou le régulateur de cluster (18).

15. Système selon la revendication 14, dans lequel le système comprend en supplément une centrale de commande (14), qui est mise au point pour déterminer des valeurs de consigne actuelles (48) et des valeurs de consigne futures (40), pour générer des paquets de données (33) avec respectivement une valeur de consigne actuelle (48) et plusieurs valeurs de consigne futures (40) et les transmettre par l'intermédiaire d'une liaison de données (16, 20) au régulateur (10) d'un générateur d'énergie (200), en particulier au régulateur de parc éolien (10), et/ou au régulateur de cluster (18).
